# EUROPEAN PATENT APPLICATION

(11) **EP 1 895 172 A2**
(43) Date of publication of application: **05.03.2008**
(21) Application number: 07114175.8
(22) Date of filing: 10.08.2007
(51) Int. Cl.: F16B 7/04

(54) **Tube connector**

(30) Priority: 28.08.2006 CN 200620131659 U; 05.03.2007 CN 200720003078 U
(71) Applicant: Yang, Chou-Lian, 407 Taichung City (TW)
(72) Inventor: Yang, Chou-Lian, 407 Taichung City (TW)
(74) Representative: Viering, Jentschura & Partner

(57) **Abstract**

This invention relates to a tube connector (1) for connecting a plurality of tubes (100), said tube connector (1) comprising: a first cover (10) including a first groove (11) and a third groove (13); a second cover (20) including a second groove (21) and a fourth groove (23), said first and second grooves forming a first tube accommodation space, and said third and fourth grooves forming a second tube accommodation space; a fastener (40) for fastening the first cover and the second cover; and a springy member (50) secured between the first and the second covers for detaching the same when the fastener (40) is loosened.

## Description

### BACKGROUND OF THE INVENTION

### 1. Field of the Invention

The present invention relates to a tube connector for connecting a plurality of tubes. More specifically, it relates to a tube connector with a springy member.

### 2. Description of the Related Art

Articles made by the assembly of tubes are ubiquitous in daily life; they can be found in places from assembly houses to various kinds of furniture. In general, articles made by the assembly of tubes provide several advantages, such as convenience of assembly and disassembly, ease of delivery when disassembled, and ability to form complicated structures with only a few types of tubes.

In different applications, tubes and tube connectors are the most fundamental components. During the assembly process, users need to arrange at least two tubes into the proper position and secure the tubes with tube connectors. Currently, commercially available tube connectors vary greatly in terms of material, structure, strength, and connection relationship. Among them, one tube connector provides two covers (an upper one and a lower one) to encompass tubes partially, and these covers may be fastened by screws so as to secure the tubes.

### SUMMARY OF THE INVENTION

In order to increase the utility of tube connectors, the inventor proposes a novel tube connector with a springy member for detaching the covers.

It is therefore an object of the present invention to provide a tube connector for connecting a plurality of tubes, said tube connector comprising: a first cover including a first groove and a third groove; a second cover including a second groove and a fourth groove, said first and second grooves forming a first tube accommodation space, and said third and fourth grooves forming a second tube accommodation space; a fastener for fastening the first cover and the second cover; and a springy member secured between the first and the second covers for detaching the same when the fastener is loosened.

In this invention, the covers of the tube connector may be forced apart by the springy member when the fastener is loosened; thus, a gap is formed between the first cover and the second cover before the fastener is tightened, and the gap may leave the tube accommodation spaces slightly open, facilitating the assembly of the tubes. By the design of the present invention, manufacturers may assemble the covers with the fasteners in advance and leave the tube accommodation spaces slightly open. When users assemble a plurality of tubes with the tube connector, they may set the tubes into the tube accommodation spaces easily, without having to assemble the tube connector by themselves; then users may firmly join the tubes by tightening the fasteners. Similarly, when the users disassemble an article constructed by an assembly of tubes, they may slightly separate the first and the second covers by partially loosening the fastener. The inherent resilience of the springy member may maintain the separated state of the covers and enable users to remove the tubes with ease. Therefore, the present invention largely increases the convenience of both the assembly and the disassembly of tube structures, and users will no longer need to separate the covers manually.

It should be noted that in the present invention, the tube accommodation spaces may be, but are not limited to, cylindrical or other shapes such as square, rectangular, clover, or irregular, depending on the types of tubes to be used. Correspondingly, the tubes may or may not be rotated when secured by the tube connector. Furthermore, the tubes used in this invention may be solid or hollow, rigid or flexible, including without limitation any bar-shaped article such as bars, poles, sticks, and rods.

In order to further secure the springy member, a springy member accommodation space is formed in the covers, in which a structure for securing the springy member, around which the springy member may be wrapped or to which the springy member may be otherwise attached, is provided.

In this invention, there are two or more tube accommodation spaces, which may be communicable or not. Moreover, the spatial relationship between each space is not limited to certain types. In other words, when the tubes are connected by the tube connector, whether in physical contact or not, the tubes may be parallel or perpendicular to each other or in a specific angular relationship. Furthermore, the size of each tube accommodation space may be the same as or different from the corresponding tube accommodation space. In brief, the tube connector of this invention may be adapted to join tubes with identical or different sizes and shapes.

Other objects, advantages, and novel features of the invention will become more apparent from the following detailed description when taken in conjunction with the accompanying drawings.

### BRIEF DESCRIPTION OF THE DRAWINGS

The accompanying drawings, which are included in and constitute a part of this specification, illustrate the embodiments of the invention and, together with the description, explain the features and principles of the invention. In the drawings:
FIG. 1 is an illustrative diagram of the first embodiment of the present invention.
FIG. 2 is an illustrative diagram of the second embodiment of the present invention.
FIG. 3 is an illustrative diagram of the third embodiment of the present invention.
FIG. 4 is an illustrative diagram of the fourth embodiment of the present invention.
FIG. 5 is an illustrative diagram of an application of the tube connector of the present invention.

### DETAILED DESCRIPTION OF THE PREFERRED EMBODIMENT

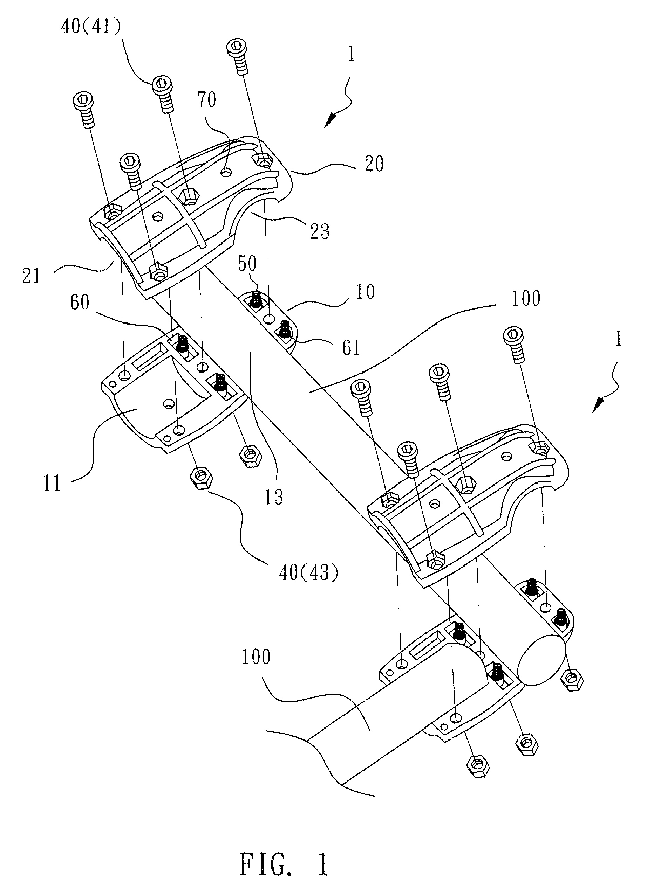

Please refer to FIG. 1 for an illustrative diagram of the first embodiment of the present invention. In this embodiment, a tube connector 1 is provided to connect a plurality of tubes 100. The tube connector 1 mainly comprises a first cover 10 including a first groove 11 and a third groove 13; a second cover 20 including a second groove 21 and a fourth groove 23, said first and second grooves 11, 21 forming a first tube accommodation space (the space between the first groove 11 and the second groove 21, not specifically pointed out in this figure), and said third and fourth grooves 13, 23 forming a second tube accommodation space (the space between the third groove 13 and the fourth groove 23, not specifically pointed out in this figure); four fasteners 40 for fastening the first cover 10 and the second cover 20; and four springy members 50 secured between the first and the second covers 10, 20 for detaching the same when the fastener 40 is loosened. As shown, the tube connector 1 in this embodiment is mainly adapted to connect two parallel tubes 100.

In this embodiment, a total of four fasteners 40 are used to fasten the first cover 10 and the second cover 20; however, the number of the fasteners 40 is not limited hereto. Depending on the stability needed by users, one or more fastener 40 may also be workable. Similarly, the number of the springy members 50 is not limited to four either; one or more springy member 50 may also provide the effect of this invention substantially. In addition, the positions of the fasteners 40 and the springy members 50 are of no specific limitation; any position other than the tube accommodation spaces may be utilized to mount the fasteners 40 and the springy members 50.

As shown in FIG. 1, on the covers 10, 20, springy member accommodation spaces 60 may be formed to embed the springy members 50 between the covers 10, 20. In addition, structures 61 for securing the springy members 50 may be formed in the springy member accommodation spaces 60, such as the protrusion structures adapted by this embodiment. In this embodiment, the springy members 50 may be wrapped around the structures 61. However, the structures 61 are not limited to the protrusion structures; any structure capable of securing the springy members 50 may also be adapted.

In this invention, the fasteners 40 may be any component capable of fastening the covers 10, 20, such as the bolts 41 and nuts 43 adapted in this embodiment or their equivalents. The springy members 50 may be without limitation the springs adapted by this embodiment or their equivalents, and they are capable of forcing the covers 10, 20 apart when the fasteners 40 are loosened.

Moreover, the first cover 10 or the second cover 20 may further comprise an aperture 70 to meet the needs of specific tubes 100 or other fixing pieces. The aperture 70 may be used along with tubes 100 with a circlip spring or other similar structures to increase the connection stability of the tubes 100 and the tube connector 1; also, the aperture may be adapted in coordination with various fixing pieces, such as fixing plugs. Accordingly, the tube connector 1 of the present invention may meet different needs, even for articles requiring higher stability.

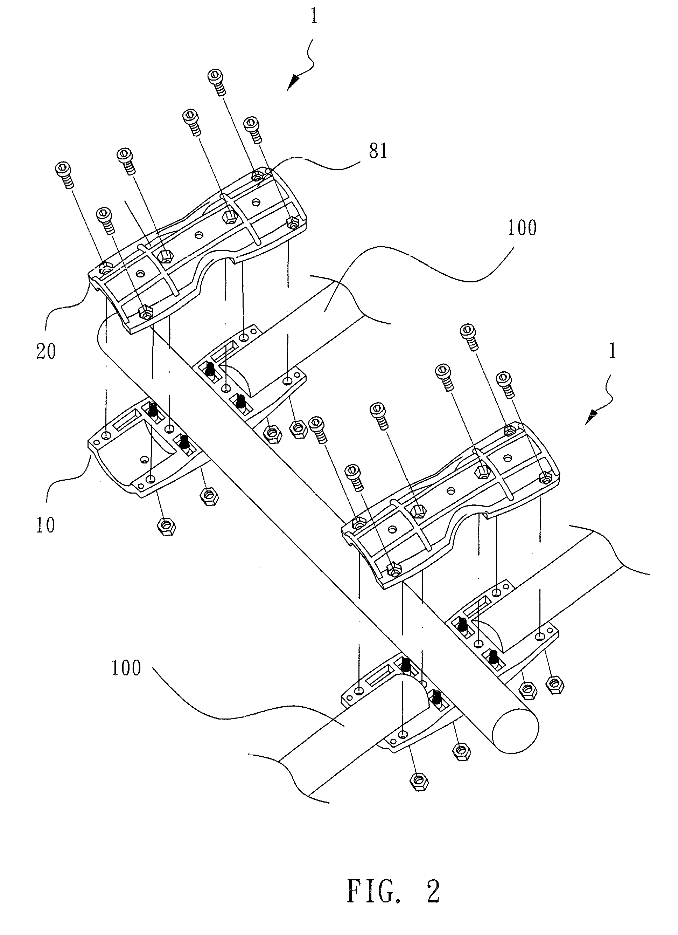

Please refer to FIG. 2 for an illustrative diagram of the second embodiment of the present invention. As shown, the tube connector 1 is used to connect three tubes, wherein two of them are arranged along an axis while substantially perpendicular to the third one. What should be specifically emphasized here is that the tube connector 1 of the present invention is not limited to connecting two or three tubes 100; four or more tubes 100 may also be connected thereby. In addition, the spatial relationship of the tube accommodation spaces formed by the grooves of the covers 10, 20 is not specifically limited; it can be parallel, perpendicular or of a certain angular orientation. Furthermore, ribs 81 may be formed on the covers 10, 20 to strengthen the structure thereof.

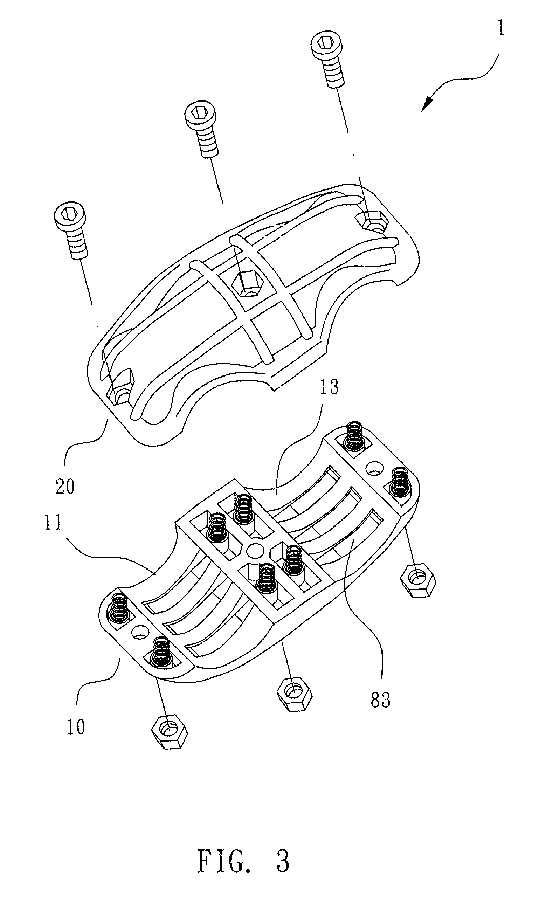

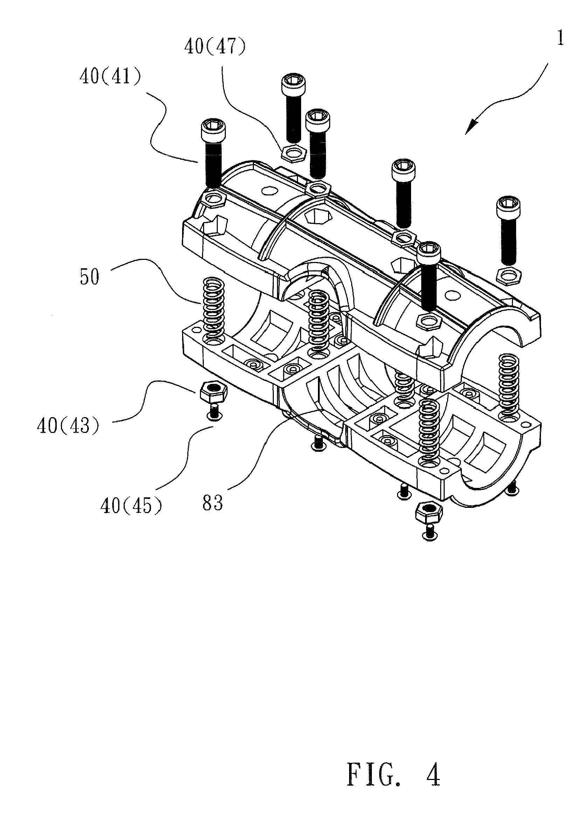

Please refer to FIG. 3 for an illustrative diagram of the third embodiment of the present invention. In this embodiment, the tube connector 1 is adapted to connect two parallel tubes. In addition, unlike the previous two embodiments, the tube connector 1 in this embodiment has a plurality of slits 83 formed thereon, which may prevent unequal distribution of molding material as well as decrease the quantity of the molding material used when the covers 10, 20 are made by casting or injection molding, largely reducing the costs of the tube connector 1. Refer to FIG. 4 for an illustrative diagram of the fourth embodiment of the present invention, which provides the same connection effect as shown in FIG. 2. In this embodiment, the springy members 50 and the fasteners 40 are housed in the same spaces, and the fasteners 40 are inserted in the springy members 50. In addition, the fasteners 40 of this embodiment mainly comprise bolts 41, nuts 43, closing members 45, and washers 47. The washers 47 may prevent the abrasion of the covers 10, 20 caused by the bolts, and the closing members 45 are adapted to prevent the separation of the bolts 41 and the nuts 43. Both of the washers 47 and the closing members 45 are not critical to this invention.

In the fourth embodiment, the closing members 45 are closing bolts, which are cylinders with spiral threads on their outer circumferences; the direction of the threads corresponds to that of the bolts 41. In other words, the bolts 41 have a positive-thread structure, whereas the closing bolts have a negative-thread structure. Thus, the closing bolts may still be tightly connected to the bolts 41 after users loosen the bolts 41 and the nuts 43 many times, effectively preventing the separation of the bolts 41 and the nuts 43. However, it should be noted that the closing members 45 may also be other structures capable of preventing the separation of the bolts 41 and the nuts 43, such as fixing plugs, pins, etc.

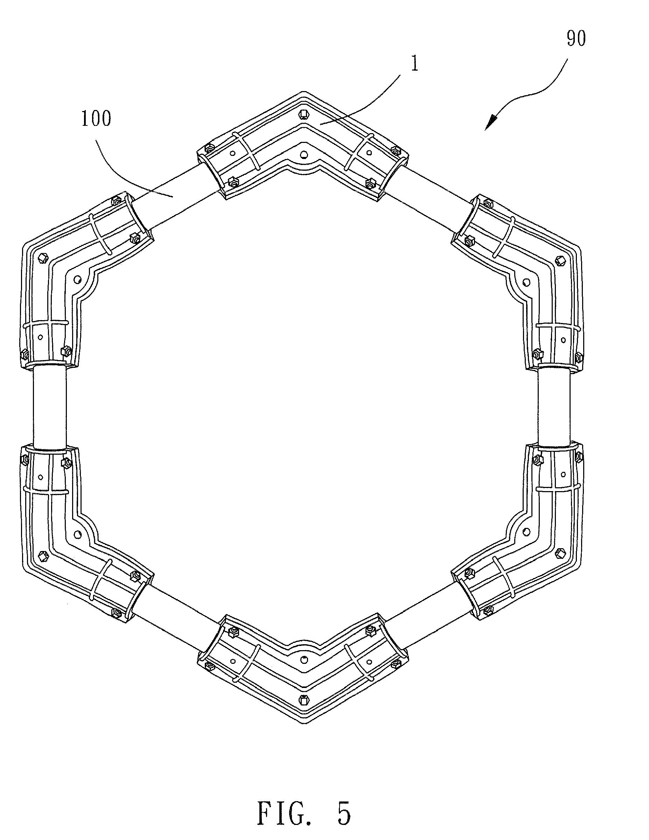

Finally, refer to FIG. 5 for an illustrative diagram of an application of the tube connector 1 of the present invention. As shown, the tube assemblage article 90 mainly consists of tube connectors 1 and tubes 100. The tube assemblage article 90 has a hexagonal structure; the angle between any two tube accommodation spaces of the tube connector 1 is 120 degrees, and the length of each tube 100 is identical. Although only one application is disclosed herein, it should be noted that any structure or assembly applying the tube connector 1 of the present invention should be deemed as falling into the scope of the present invention.

It will be understood that many other modifications can be made to the various disclosed embodiments without departing from the spirit and scope of the invention. For these reasons, the above description should not be construed as limiting the invention, but should be interpreted as merely exemplary of preferred embodiments.

## Claims

1. A tube connector for connecting a plurality of tubes, said tube connector comprising:
a first cover including a first groove and a third groove;
a second cover including a second groove and a fourth groove, said first and second grooves forming a first tube accommodation space, and said third and fourth grooves forming a second tube accommodation space;
a fastener for fastening the first cover and the second cover; and
a springy member secured between the first and the second covers for detaching the same when the fastener is loosened.

2. The tube connector of claim 1, wherein the first cover has a springy member accommodation space for housing the springy member.

3. The tube connector of claim 2, wherein a structure for securing the springy member is formed in the springy member accommodation space.

4. The tube connector of claim 1, wherein the fastener is inserted in the springy member.

5. The tube connector of claim 1, wherein the fastener comprises:
a bolt;
a nut engaging with the bolt; and
a closing member for preventing the separation of the bolt and the nut.

6. The tube connector of claim 5, wherein the closing member is a closing bolt.

7. The tube connector of claim 1, wherein the first cover comprises an aperture for securing the tubes.
